## Europäisches Patentamt

## European Patent Office

## Office européen des brevets

(19)

(11) Veröffentlichungsnummer: **0 179 989**
**B1**

(12) # EUROPÄISCHE PATENTSCHRIFT

(45) Veröffentlichungstag der Patentschrift:
**16.03.88**

(21) Anmeldenummer: **85109719.6**

(22) Anmeldetag: **02.08.85**

(51) Int. Cl.⁴: **F 16 L 11/16,** F 16 L 11/18,
F 16 L 11/00, H 02 G 3/28,
H 02 G 11/00

(54) Schlauchsystem zur Aufnahme von Energieführungsleitungen.

(30) Priorität: **02.10.84 DE 3436142**

(43) Veröffentlichungstag der Anmeldung:
**07.05.86 Patentblatt 86/19**

(45) Bekanntmachung des Hinweises auf die Patenterteilung:
**16.03.88 Patentblatt 88/11**

(84) Benannte Vertragsstaaten:
**CH DE GB IT LI SE**

(56) Entgegenhaltungen:
**DE-A-2 340 795
DE-A-2 801 330
DE-A-2 912 279
DE-A-3 140 713
DE-B-2 341 849
DE-C-52 751**

(73) Patentinhaber: **Gebr. Hennig GmbH, Dorfstrasse 41,
D-8045 Ismaning (DE)**

(72) Erfinder: **Hennig, Kurt, Georgensteinstrasse 16,
D-8000 München 71 (DE)**

(74) Vertreter: **Tetzner, Volkmar, Dr.- Ing. Dr. jur., Van-
Gogh- Strasse 3, D-8000 München 71 (DE)**

EP 0 179 989 B1

**Beschreibung**

Die Erfindung betrifft ein Schlauchsystem entsprechend des ersten Teils des Anspruches 1.

Ein Schlauchsystem der im ersten Teil des Anspruches 1 genannten Art ist beispielsweise durch die DE-B-23 41 849 bekannt. Der Schlauch wird hierbei durch ein schraubenlinienförmig um die Schlauchachse gewundenes, profiliertes Band gebildet, dessen Windungen die einzelnen Teilbereiche des Schlauches darstellen, die relativ zueinander begrenzt verschiebbar und schwenkbar sind. Das auf der Krümmungsinnenseite des Schlauches angeordnete Element wird durch einen biegsamen Streifen gebildet, der mit dem Schlauch derart verbunden ist, daß die Windungen des Schlauches auf der Krümmungsinnenseite stets und auf der Krümmungsaußenseite im gestreckten Zustand des Schlauchsystemes vollständig zusammengedrückt sind.

Im gestreckten Zustand ist das Schlauchsystem durch das Eigengewicht sowie durch das Gewicht der vom Schlauchsystem aufgenommenen Energieführungsleitungen auf Durchbiegung beansprucht. Der an der Unterseite (Krümmungsinnenseite) des Schlauchsystemes befestigte biegsame Streifen wird hierbei im gestreckten Zustand des Schlauchsystemes auf Zug beansprucht. Daraus ergibt sich eine verhältnismäßig hohe Zug- und Scherbeanspruchung für die Klebverbindung zwischen dem biegsamen Streifen und dem Schlauch. Erschwerend kommt hinzu, daß die genannte Belastung der Verbindung zwischen dem biegsamen Streifen und dem Schlauch bei der Bewegung des Schlauchsystemes im Betrieb und bei dem ständigen Wechsel zwischen gestrecktem und gekrümmtem Zustand einer dauernden Änderung unterliegt. Die in der Zone hoher Wechselbeanspruchungen befindliche Verbindung zwischen dem biegsamen Streifen und dem Schlauch ist daher einem starken Verschleiß ausgesetzt.

Zum Stand der Technik gehört weiterhin ein Schlauchsystem (DE-B-26 22 005), bei dem der Schlauch durch einzelne profilierte Rohrglieder gebildet wird, die im Querschnittsprofil eine nach innen und eine nach außen offene Nut aufweisen und mit ihren diese Nuten an den axialen Enden begrenzenden Schenke ln derart ineinandergreifen, daß benachbarte Rohrglieder des Schlauches relativ zueinander begrenzt verschiebbar und schwenkbar sind. Auch ein derartiges Schlauchsystem ist zwischen einer gestreckten Lage und einer maximal gekrümmten Lage einseitig abbiegbar. Die Herstellung ist jedoch verhältnismäßig aufwendig.

Schließlich sind auch Schlauchsysteme bekannt (DE-A-28 01 330 und DE-A-29 12 279), die aus einem oder mehreren profilierten, ineinandergreifenden Metallbändern bestehen, wobei das Bandprofil in einem Teilbereich des Umfanges so ausgeführt bzw. nachträglich verformt ist, daß es die Relativverschiebbarkeit benachbarter Teilbereiche des Schlauches in dieser Zone verhindert, wodurch das Schlauchsystem nur einseitig abbiegbar ist.

Der Erfindung liegt die Aufgabe zugrunde, ein Schlauchsystem entsprechend des ersten Teils des Anspruches 1 dahin weiterzuentwickeln, daß die Beanspruchung der Verbindung zwischen dem (ersten) Schlauch und dem mit der Krümmungsinnenseite dieses Schlauches verbundenen Element wesentlich verringert ist, so daß sich eine erhöhte Lebensdauer dieser Verbindung ergibt.

Diese Aufgabe wird erfindungsgemäß durch die kennzeichnenden Merkmale des Anspruches 1 gelöst.

Erfindungsgemäß wird das Schlauchsystem somit durch zwei Schläuche gebildet, die in unterschiedlich ausgezogenem Zustand miteinander verbunden sind: Im gestreckten Zustand des Schlauchsystemes ist der erste, krümmungsäußere Schlauch vollständig zusammengedrückt und der zweite, krümmungsinnere Schlauch vollständig gespreizt.

Dadurch befindet sich die Verbindung zwischen den beiden Schläuchen etwa in der neutralen Zone des Schlauchsystemes, so daß insbesondere die in der Strecklage des Schlauchsystemes wirkenden, auf Durchbiegung gerichteten Kräfte nur eine geringe Beanspruchung der Verbindung der beiden Schläuche bewirken. Die Lebensdauer dieser Verbindung und damit die Haltbarkeit des ganzen Schlauchsystemes wird auf diese Weise erheblich verbessert.

Die maximale Krümmung des Schlauchsystemes kann entweder dadurch bestimmt werden, daß die Teilbereiche des ersten Schlauches auf der Krümmungsaußenseite vollständig gespreizt sind (so daß hier die Schenkel benachbarter Teilbereiche des ersten Schlauches zum Anschlag kommen) oder dadurch, daß die Teilbereiche des zweiten Schlauches auf der Krümmungsinnenseite vollständig zusammengedrückt sind.

Bei einer besonders zweckmäßigen Ausgestaltung der Erfindung sind im Zustand maximaler Krümmung des Schlauchsystemes beide vorstehend genannten Bedingungen gegeben: Der erste Schlauch ist auf der Krümmungsaußenseite vollständig gespreizt und der zweite Schlauch ist auf der Krümmungsinnenseite vollständig zusammengedrückt. Hierbei werden somit die im maximalen Krümmungszustand wirkenden Anschlagkräfte gleichmäßig von beiden Schläuchen aufgenommen, wobei auch hier die in der neutralen Zone liegende Verbindung der Schläuche von Kräften weitgehend frei ist.

Außer den vorstehend erläuterten strukturellen Vorzügen besitzt das erfindungsgemäße Schlauchsystem weitere Vorteile in der praktischen Verwendung.

Durch die beiden Schläuche sind im Schlauchsystem zwei gesonderte Innenräume vorhanden, die zur getrennten Verlegung von Energieführungsleitungen verwendet werden können. So ist es auf diese Weise beispielsweise möglich, Kraftleitungen und Steuerleitungen in gesonderten Kammern zu verlegen.

Bei einer zweckmäßigen Ausgestaltung der Erfindung ist ferner in den miteinander verbundenen Seiten der Schläuche eine in Längsrichtung des Schlauchsystemes verlaufende Ausnehmung vorgesehen, durch die die Innenräume der beiden Schläuche miteinander in Verbindung stehen. Eine solche offene Verbindung zwischen den beiden Innenräumen erleichtert beispielsweise das Einführen großer oder sperriger Teile, etwa das Einbringen montierter Kabelstecker

Dabei besteht auch die Möglichkeit, die genannte Ausnehmung nachträglich durch ein Trennelement zu verschließen, beispielsweise durch ein biegsames Band, das in seitlichen Führungsschlitzen geführt ist.

Die Schläuche des erfindungsgemäßen Schlauchsystemes können entweder durch ein schraubenlinienförmig um die Schlauchachse gewundenes, profiliertes Band gebildet werden oder durch einzelne profilierte Rohrglieder Selbstverständlich ist auch eine Kombination möglich, indem beispielsweise der eine Schlauch durch ein schraubenlinienförmig gewickeltes Band und der andere Schlauch durch einzelne Rohrglieder gebildet wird.

Die Schläuche können entweder aus Metall oder aus Kunststoff bestehen. Auch hier sind die verschiedensten Kombinationen möglich.

Im Rahmen der Erfindung können ferner mehrere parallel nebeneinander angeordnete erste Schläuche vorgesehen werden, die mit einem oder mehreren parallel nebeneinander angeordneten zweiten Schläuchen verbunden sind. In entsprechender Weise ist es auch möglich, mehrere parallel nebeneinander angeordnete zweite Schläuche vorzusehen, die mit einem oder mit mehreren parallel nebeneinander angeordneten ersten Schläuchen verbunden sind.

Einige Ausführungsbeispiele der Erfindung sind in der Zeichnung veranschaulicht. Es zeigen

Fig. 1 eine Seitenansicht eines Teiles eines erfindungsgemäßen Schlauchsystemes im gestreckten Zustand,

Fig. 2 das Schlauchsystem gemäß Fig.1 im gekrümmten Zustand,

Fig. 3 und 4 Teilschnitte durch zwei benachbarte Windungen des Schlauchsystemes gemäß den Fig. 1 und 2 im vollständig zusammengedrückten bzw. gestreckten Zustand,

Fig. 5 einen Schnitt durch das Schlauchsystem längs der Linie V-V der Fig.1,

Fig. 6 einen Schnitt durch ein abgewandeltes Ausführungsbeispiel der Erfindung,

Fig. 7 einen Schnitt durch eine weitere Ausführungsform,

Fig. 8 und 9 Schnitte durch zwei Teilbereiche (Rohrglieder) eines weiteren Ausführungsbeispieles des erfindungsgemäßen Schlauchsystemes im zusammengedrückten bzw. abgewinkelten Zustand.

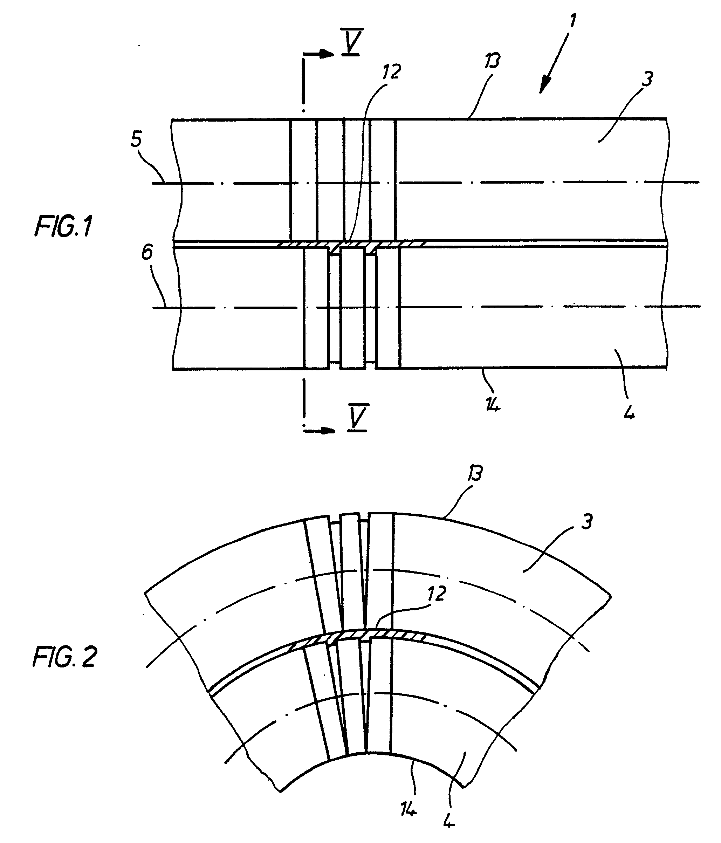

Das in den Fig. 1 bis 5 dargestellte, einseitig abbiegbare Schlauchsystem 1 zur Aufnahme von (lediglich in Fig. 5 schematisch angedeuteten) flexiblen Energieführungsleitungen 2 enthält zwei Schläuche 3, 4 von etwa rechteckigem Querschnitt.

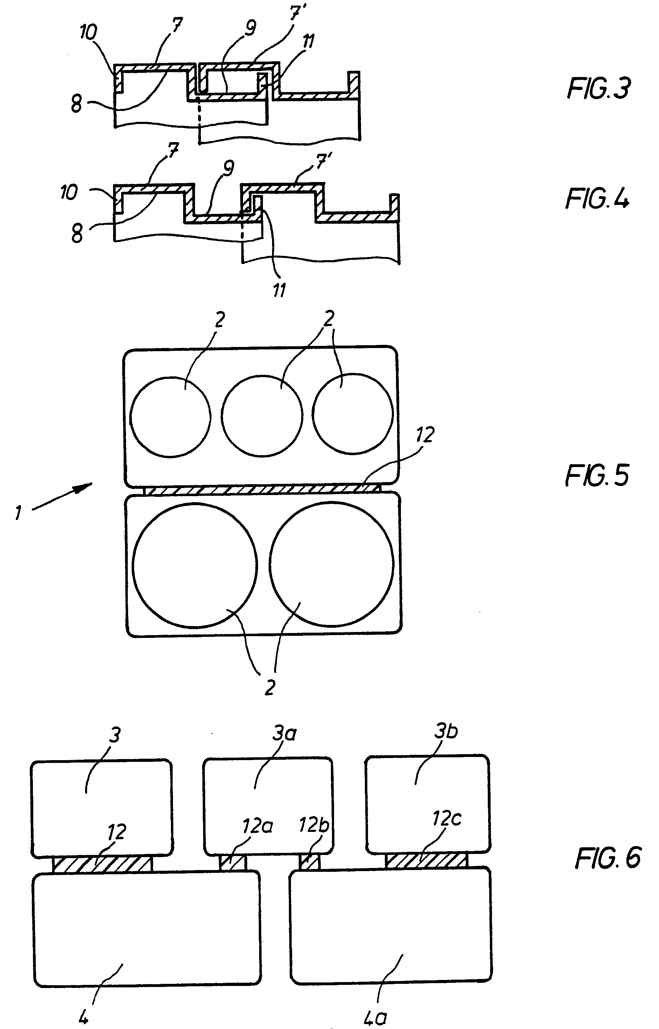

Die beiden Schläuche 3, 4 werden jeweils durch ein schraubenlinienförmig um die Schlauchachse 5 bzw. 6 gewundenes, profiliertes Band gebildet, dessen Querschnittsprofil aus den Fig. 3 und 4 hervorgeht.

Von dem schraubenlinienförmig gewundenen Band, das die Schläuche 3 bzw. 4 bildet, sind in Fig. 3 lediglich zwei benachbarte Windungen 7 und 7' teilweise veranschaulicht. Das Band, das ein etwa S-förmiges Querschnittsprofil besitzt, enthält eine nach innen offene Nut 8 und eine nach außen offene Nut 9. Mit ihren diese Nuten 8, 9 an den axialen Enden begrenzenden Schenkeln 10, 11 greifen benachbarte Windungen 7, 7' in der aus den Fig. 3 und 4 ersichtlichen Weise ineinander. Auf diese Weise sind benachbarte Windungen 7, 7' relativ zueinander begrenzt verschiebbar und schwenkbar.

Die beiden Schläuche 3 und 4 sind unmittelbar übereinander angeordnet und im Bereich der beiden aufeinanderliegenden Breitseiten in geeigneter Weise, beispielsweise mittels einer Klebstoffverbindung 12, miteinander verbunden. Diese Verbindung braucht sich dabei nicht über die gesamte Fläche der aufeinanderliegenden Breitseiten der beiden Schläuche 3 und 4 zu erstrecken; es genügt, wenn zumindest Teilbereiche in gewissen axialen Abständen miteinander verbunden sind.

Die beiden Schläuche 3 und 4 sind jedoch in unterschiedlichem Zustand miteinander verbunden: Im gestreckten (geraden) Zustand des Schlauchsystemes ist der obere (auf der späteren Krümmungsaußenseite liegende) Schlauch 3 vollständig zusammengedrückt, während der untere (auf der späteren Krümmungsinnenseite liegende) Schlauch 4 im gestreckten Zustand des Schlauchsystemes (Fig. 1) vollständig gespreizt ist. Im gestreckten Zustand des Schlauchsystemes nehmen also benachbarte Windungen 7, 7' des oberen Schlauches 3 die Lage gemäß Fig. 3 ein, während sich benachbarte Windungen 7, 7' des unteren Schlauches 4 in der Lage gemäß Fig. 4 befinden.

In der Strecklage gemäß Fig. 1 wirken somit sowohl die auf Druck beanspruchten Windungen an der Oberseite 13 des Schlauches 3, als auch die auf Zug beanspruchten Windungen an der Unterseite 14 des Schlauches 4 den auf Durchbiegung gerichteten Kräften des Schlauchsystemes (Eigengewicht sowie Gewicht der aufgenommenen Energieführungsleitungen) entgegen. Die Klebstoffverbindung 12 befindet sich demgegenüber etwa in der neutralen Zone und wird daher kräftemäßig kaum beansprucht.

Wird nun das Schlauchsystem in den Krümmungszonen (d.h. an den Umlenkungszonen) abgebogen (vgl. Fig. 2), so bleibt die Lage der Schlauchwindungen des krümmungsäußeren Schlauches 3 und des krümmungsinneren Schlauches 4 im Bereich der Klebstoffverbindung 12 erhalten: Die Windungen des Schlauches 3 sind hier (im Bereich der Klebstoffverbindung 12) nach wie vor vollständig zusammengedrückt und die Windungen des Schlauches 4 vollständig gespreizt.

Dagegen sind die Windungen des Schlauches 3 an der Krümmungsaußenseite (Oberseite) 13 gespreizt und die Windungen des Schlauches 4 an der Krümmungsinnenseite (Unterseite) 14 zusammengedrückt.

Die maximale Krümmungslage des Schlauchsystemes kann nun dadurch bestimmt werden, daß die Windungen des krümmungsäußeren (ersten) Schlauches 3 vollständig gespreizt sind (Zustand der Windungen an der Oberseite 13 gemäß Fig. 4) oder daß die Windungen des krümmungsinneren (zweiten) Schlauches 4 an der Unterseite 14 vollständig zusammengedrückt sind (Lage der Windungen gemäß Fig. 3). Die Dimensionierung der beiden Schläuche 3 und 4 kann vorteilhaft so gewählt werden, daß die beiden vorstehend genannten Bedingungen gleichzeitig zutreffen. In diesem letzteren Falle werden die im Zustand maximaler Krümmung auftretenden Anschlagkräfte sowohl von dem krümmungsäußeren Schlauch 3 als auch von dem krümmungsinneren Schlauch 4 aufgenommen. Die in der neutralen Zone liegende Klebstoffverbindung 12 bleibt auch im gekrümmten Zustand des Schlauchsystemes von Kräften praktisch frei.

Fig. 6 veranschaulicht eine Variante, bei der drei parallel nebeneinander angeordnete erste (obere) Schläuche 3, 3a, 3b über Klebstoffverbindungen 12, 12a, 12b, 12c mit zwei zweiten (unteren) Schläuchen 4, 4a verbunden sind. Auf diese Weise enthält das Schlauchsystem insgesamt fünf Kammern, in denen Energieführungsleitungen getrennt voneinander untergebracht werden können. Es versteht sich, daß die Zahl, Größe und Anordnung der Schläuche des erfindungsgemäßen Schlauchsystemes im Rahmen der Erfindung beliebig variiert werden kann.

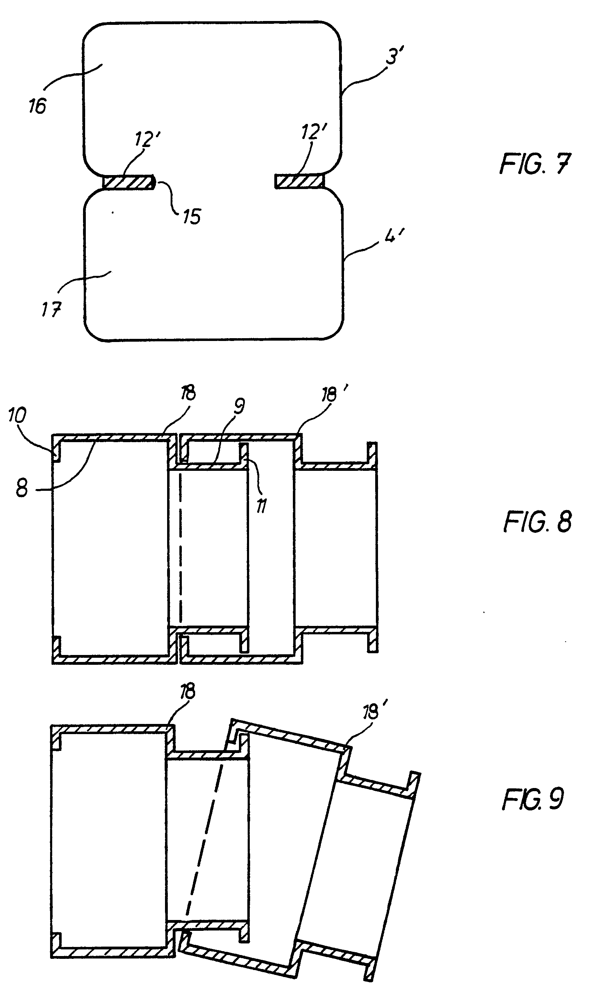

Fig. 7 zeigt ein Schlauchsystem, bei dem in den durch eine Klebstoffverbindung 12' miteinander verbundenen Seiten der Schläuche 3', 4' eine in Längsrichtung des Schlauchsystemes verlaufende Ausnehmung 15 vorgesehen ist, durch die die Innenräume 16, 17 der beiden Schläuche 3', 4' miteinander in Verbindung stehen. Dadurch wird die Montage und Demontage der (in Fig. 7 nicht veranschaulichten) Energieführungsleitungen erleichtert. So ermöglicht die Ausnehmung 15 beispielsweise die Unterbringung von Kabeln mit montierten Steckern und dergleichen.

Wie bei den Ausführungsbeispielen der Fig. 1 bis 5 und gemäß Fig. 6 sind auch bei dem Schlauchsystem entsprechend Fig. 7 der erste, krümmungsäußere Schlauch 3' und der zweite, krümmungsinnere Schlauch 4' in unterschiedlich gedrücktem bzw. gespreiztem Zustand im Bereich der Klebstoffverbindung 12' miteinander verbunden, wie dies anhand der Fig. 1 bis 5 im einzelnen erläutert wurde.

Bei dem Ausführungsbeispiel gemäß den Fig. 1 bis 5 werden die in Längsrichtung des Schlauches aufeinanderfolgenden Teilbereiche, die relativ zueinander begrenzt verschiebbar und schwenkbar sind, durch benachbarte Windungen eines schraubenlinienförmig um die Schlauchachse gewundenen, profilierten Bandes gebildet.

Die Fig. 8 und 9 veranschaulichen demgegenüber eine Variante, bei der die in Längsrichtung des ersten und/oder zweiten Schlauches aufeinanderfolgenden Teilbereiche durch einzelne, profilierte Rohrglieder 18, 18' gebildet werden. Diese Rohrglieder besitzen gleichfalls ein S-förmiges Querschnittsprofil und enthalten eine nach innen offene Nut 8 und eine nach außen offene Nut 9, wobei sie mit ihren diese Nuten 8, 9 an den axialen Enden begrenzenden Schenkeln 10, 11 derart ineinandergreifen, daß benachbarte Rohrglieder 18, 18' begrenzt verschiebbar und schwenkbar sind (vgl. Fig. 8 und 9)

Die Verbindung des ersten, krümmungsäußeren Schlauches 3 und des zweiten, krümmungsinneren Schlauches 4 erfolgt auch beim Ausführungsbeispiel der Fig. 8 und 9 in gleicher Weise, wie dies anhand der Variante gemäß den Fig. 1 bis 5 erläutert wurde.

Im Rahmen der Erfindung sind zahlreiche Varianten möglich.

So können die Schläuche aus Metall oder Kunststoff bestehen oder in einer Mischtechnik ausgeführt sein.

Vielfältige Möglichkeiten gibt es weiterhin für die Verbindung der beiden Schläuche.

Wird eine Ausnehmung 15 (entsprechend Fig. 7) vorgesehen, so kann diese Ausnehmung nachträglich durch ein Trennelement, vorzugsweise durch ein in seitlichen Führungsschlitzen geführtes biegsames Band, verschlossen werden.

In Abwandlung des in Fig. 6 dargestellten Ausführungsbeispieles ist es im Rahmen der Erfindung beispielsweise auch möglich, zwischen zwei oberen Schläuchen (etwa den Schläuchen 3 und 3b gemäß Fig. 6), die mit einem oder mit mehreren unteren Schläuchen fest verbunden sind, einen weiteren Schlauch mehr oder weniger lose einzulegen, d.h. ohne feste Verbindung zum unteren Schlauch. Dieser lose eingelegte, krümmungsäußere Schlauch ist dabei im gestreckten Zustand des Schlauchsystemes vollständig zusammengedrückt (ebenso wie die weiteren krümmungsäußeren Schläuche).

**Patentansprüche**

1. Einseitig abbiegbares Schlauchsystem zur Aufnahme von flexiblen Energieführungsleitungen (2), enthaltend
a) einen ersten Schlauch (3), bei dem in Längsrichtung des Schlauches aufeinanderfolgende Teilbereiche des Schlauches im Querschnittsprofil eine nach innen und eine nach außen offene Nut (8, 9) aufweisen und mit ihren diese Nuten an den axialen Enden begrenzenden Schenkeln (10, 11) derart ineinandergreifen, daß benachbarte Teilbereiche des Schlauches relativ zueinander begrenzt verschiebbar und schwenkbar sind,
b) ein auf der Krümmungsinnenseite des ersten Schlauches (3) angeordnetes Element, das mit wenigstens einigen Teilbereichen des ersten Schlauches derart verbunden ist, daß die Teilbereiche des ersten Schlauches auf der Krümmungsinnenseite stets und auf der Krümmungsaußenseite im gestreckten Zustand des Schlauchsystemes vollständig zusammengedrückt sind,
gekennzeichnet durch folgende Merkmale:
c) das Element gemäß Merkmal b) wird durch einen zweiten Schlauch (4) gebildet, dessen Aufbau dem Merkmal a) entspricht,
d) der zweite, krümmungsinnere Schlauch (4) ist mit dem ersten, krümmungsäußeren Schlauch (3) derart verbunden, daß die Teilbereiche des zweiten Schlauches auf der Krümmungsaußenseite stets und auf der Krümmungsinnenseite im gestreckten Zustand des Schlauchsystemes vollständig gespreizt sind.

2. Schlauchsystem nach Anspruch 1, dadurch gekennzeichnet, daß die beiden Schläuche (3, 4) derart dimensioniert sind, daß bei maximaler Krümmung des Schlauchsystems die Teilbereiche des ersten Schlauches (3) auf der Krümmungsaußenseite vollständig gespreizt sind.

3. Schlauchsystem nach Anspruch 1 oder 2, dadurch gekennzeichnet, daß die beiden Schläuche (3, 4) derart dimensioniert sind, daß bei maximaler Krümmung des Schlauchsystemes die Teilbereiche des zweiten Schlauches (4) auf der Krümmungsinnenseite vollständig zusammengedrückt sind.

4. Schlauchsystem nach Anspruch 1, dadurch gekennzeichnet, daß die in Längsrichtung des ersten und/oder zweiten Schlauches (3, 4) aufeinanderfolgenden Teilbereiche durch benachbarte Windungen (7, 7') eines schraubenlinienförmig um die Schlauchachse gewundenen, profilierten Bandes gebildet werden.

5. Schlauchsystem nach Anspruch 1, dadurch gekennzeichnet, daß die in Längsrichtung des ersten und/oder zweiten Schlauches (3, 4) aufeinanderfolgenden Teilbereiche durch einzelne, profilierte Rohrglieder (18, 18') gebildet werden.

6. Schlauchsystem nach Anspruch 1, dadurch gekennzeichnet, daß die Schläuche (3, 4) aus Metall bestehen.

7. Schlauchsystem nach Anspruch 1, dadurch gekennzeichnet, daß die Schläuche (3, 4) aus Kunststoff bestehen.

8. Schlauchsystem nach Anspruch 1, dadurch gekennzeichnet, daß in den miteinander verbundenen Seiten der Schläuche (3', 4') eine in Längsrichtung des Schlauchsystems verlaufende Ausnehmung (15) vorgesehen ist, durch die die Innenräume (16, 17) der beiden Schläuche miteinander in Verbindung stehen.

9. Schlauchsystem nach Anspruch 8, dadurch gekennzeichnet, daß die Ausnehmung (15) durch ein Trennelement, vorzugsweise durch ein in seitlichen Führungsschlitzen geführtes biegsames Band, nachträglich verschließbar ist.

10. Schlauchsystem nach Anspruch 1, gekennzeichnet durch mehrere parallel nebeneinander angeordnete erste Schläuche (3, 3a, 3b), die mit einem oder mit mehreren parallel nebeneinander angeordneten zweiten Schläuchen (4, 4a) verbunden sind.

11. Schlauchsystem nach Anspruch 1, gekennzeichnet durch mehrere parallel nebeneinander angeordnete zweite Schläuche (4, 4a), die mit einem oder mit mehreren parallel nebeneinander angeordneten Schläuchen (3, 3a, 3b) verbunden sind.

**Claims**

1. Flexible tube system which is capable of being bent to one side and serves to receive flexible energy-conducting leads (2), containing
a) a first tube (3) in which parts which follow one another in the longitudinal direction of the tube have in their cross-sectional profile a groove (8) which is open towards the interior and a groove (9) which is open towards the exterior interengage with their arms (10, 11) defining the axial ends of these grooves in such a way that adjacent parts of the tube are capable of limited movement and pivoting with respect to one another,
b) an element which is arranged on the inner face of the curve of the first tube (3) and is connected to at least some parts of the first tube in such a way that the parts of the first tube on the inner face of the curve are always completely compressed and the parts of the tube on the outer face of the curve are completely compressed in the extended state of the flexible tube system,
characterized by the following features:
c) the element according to feature b) is formed by a second tube (4) the construction of which corresponds to feature a),
d) the second tube (4) on the inner curve is connected to the first tube (3) on the outer curve in such a way that the parts of the second tube are always completely expanded on the outer face of the curve and are completely expanded on the inner face of the curve in the extended state of the flexible tube system.

2. Flexible tube system as claimed in claim 1, characterized in that the two tubes (3, 4) are dimensioned in such a way that at the maximum curvature of the flexible tube system the parts of the first tube (3) are completely expanded on the outer face of the curve.

3. Flexible tube as claimed in claims 1 or 2, characterised in that the two tubes (3, 4) are dimensioned in such a way that at the maximum curvature of the flexible tube system the parts of the second tube (4) are completely compressed on the inner face of the curve.

4. Flexible tube system as claimed in claim 1, characterised in that the parts which follow one another in the longitudinal direction of the first and/or second tube (3, 4) are formed by adjacent windings (7, 7') of a profiled band which is wound helically around the tube axis.

5. Flexible tube system as claimed in claim 1, characterised in that the parts which follow one another in the longitudinal direction of the first and/or second tube (3, 4) are formed by individual profiled tubular elements (18, 18').

6. Flexible tube system as claims in claim 1, characterised in that the tubes (3, 4) are made from metal.

7. Flexible tube system as claims in claim 1, characterised in that the tubes (3, 4) are made from plastics material.

8. Flexible tube system as claimed in claim 1, characterised in that a recess (15) which runs in the longitudinal direction of the flexible tube system and through which the interiors (16, 17) of the two tubes are connected to one another is provided in the sides of the tubes (3, 4) which are connected to one another.

9. Flexible tube system as claimed in claim 8, characterized in that the recess (15) can be closed at a later stage by a separating element, preferably a flexible strip guided in lateral guide slots.

10. Flexible tube system as claimed in claim 1, characterised by a plurality of tubes (3, 3a, 3b) which are arranged parallel adjacent to one another and are connected to one or more second tubes (4, 4a) arranged parallel adjacent to one another.

11. Flexible tube system as claimed in claim 1, characterised by a plurality of tubes (4, 4a) which are arranged parallel adjacent to one another and are connected to one or more tubes (3, 3a, 3b) which are arranged parallel adjacent to one another.

## Revendications

1. Système de tuyau flexible et pouvant être recourbé d'un côte pour pose de câbles souples de conduction d'énergie (2), comprenant

a) un premier tuyau flexible (3), dont des parties se succèdant dans la direction de la longueur présentent en profil transversal une gorge ouverte vers l'intérieur et une gorge ouverte vers l'extérieur (8, 9) et dont les tronçons (10, 11) délimitant ces gorges aux extrémités axiales s'encastrent les uns dans les autres de manière que des parties voisines du flexible soient translatables et puissent pivoter les unes par rapport aux autres de manière limitée,

b) un organe disposé sur le côté intérieur de la courbure du premier flexible (3) et relié a au moins quelques unes des parties de ce dernier de manière que les parties de ce premier flexible soient toujours à l'état totalement comprimé sur le côté intérieur de la courbure et le soient sur le côté extérieur de la courbure lorsque le système de tuyau flexible est à l'état étiré,

caractérisé par les particularités suivantes:

c) l'organe selon le point b) est formé d'un second tuyau flexible (4) dont la structure correspond à celle du point a),

d) le second tuyau flexible (4) situé à l'intérieur de la courbure est relié au premier (3) situé à l'extérieur de la courbure de manière que les parties du second flexible soient toujours à l'état totalement écarté sur le côté extérieur de la courbure et le soient sur le côté intérieur de la courbure lorsque le système de tuyau flexible est à l'état étiré.

2. Système de tuyau flexible selon la revendication 1, caractérisé en ce que les deux flexibles (3, 4) sont dimensionnés de manière que, lorsque le système des flexibles est à l'état de courbure maximale, les parties du premier flexible (3) soient à l'état totalement écarté sur le côté extérieur de la courbure.

3. Système de tuyau flexible selon une des revendications 1 et 2, caractérisé en ce que les deux flexibles (3, 4) sont dimensionnés de manière que, lorsque le système de ces flexibles est à l'état de courbure maximale, les parties du second flexible (4) soient totalement comprimées sur le côté intérieur de la courbure.

4. Système de tuyau flexible selon la revendication 1, caractérisé en ce que les parties successives, dans la direction de leur longueur, du premier et/ou du second flexible (3, 4) sont formées par des spires voisines (7, 7') d'un ruban profilé et enroulés en hélice autour de l'axe du flexible.

5. Système de tuyau flexible selon la revendication 1, caractérisé en ce que les parties successives, dans la direction de leur longueur, du premier et/ou du second flexible (3, 4) sont formées d'éléments individuels de tube profilé (18, 18').

6. Système de tuyau flexible selon la revendication 1, caractérisé en ce que les flexibles (3, 4) sont en métal.

7. Système de tuyau flexible selon la revendication 1, caractérisé en ce que les flexibles (3, 4) sont en matière plastique.

8. Système de tuyau flexible selon la revendication 1, caractérisé en ce qu'un évidement (15) orienté dans la direction de la longueur dudit système et réalisé dans les côtés des flexibles (3', 4') qui sont reliés les uns aux autres fait communiquer les volumes intérieurs (16, 17) des deux flexibles.

9. Système de tuyau flexible selon la revendication 8, caractérisé en ce que l'évidement (15) est obturable par la suite au moyen d'un élément séparateur, de préférence au moyen d'un ruban souple et guidé dans des rainures latérales.

10. Système de tuyau flexible selon la revendication 1, caractérisé par plusieurs premiers flexibles (3, 3a, 3b) disposés parallèlement les uns à côté des autres et reliés à un second flexible ou à plusieurs seconds flexibles (4, 4a) disposés parallèlement les uns à côté des autres.

11. Système de tuyau flexible selon la revendication 1, caractérisé par plusieurs seconds tuyaux flexibles (4, 4a) disposés parallèlement les uns à côté des autres et reliés à un ou plusieurs tuyaux flexibles (3, 3a, 3b) disposés parallèlement les uns à côté des autres.

FIG.1

FIG.2

0 179 989

FIG. 3

FIG. 4

FIG. 5

FIG. 6

FIG. 7

FIG. 8

FIG. 9